# EUROPÄISCHE PATENTANMELDUNG

(11) **EP 0 665 487 A1**
(43) Veröffentlichungstag der Anmeldung: **02.08.1995**
(21) Anmeldenummer: 95100435.7
(22) Anmeldetag: 13.01.1995
(51) Int. Cl.: G06F 1/20, G05D 23/19

(54) **Rechner mit Temperaturüberwachungseinheit**

(30) Priorität: 01.02.1994 DE 9401645 U
(71) Anmelder: SIEMENS AKTIENGESELLSCHAFT, D-80333 München (DE)
(72) Erfinder: Trauth, Armin, D-76829 Landau (DE)

(57) **Zusammenfassung**

Um Reaktionen auf überhöhte Innentemperaturen in einem Rechnergehäuse flexibel gestalten zu können, ist eine Temperaturüberwachungseinheit (2) vorgesehen, welche die Innentemperatur mit einem Temperaturgrenzwert vergleicht und beim Überschreiten des Grenzwertes entsprechend einer Parametrierung entweder in einer ersten Betriebsart einen zu steuernden technischen Prozeß (9) in einen sicheren Zustand nach Maßgabe eines im Rechner ablaufenden Programms steuert oder in einer zweiten Betriebsart die Rechnerelektronik abschaltet.

Die Erfindung wird angewandt in Industrie-PCs.

## Beschreibung

Die Erfindung betrifft einen Rechner, insbesondere einen Personalcomputer, mit einem Gehäuse, welcher einen technischen Prozeß steuert und der mit Mitteln zum Erfassen der Innentemperatur des Rechnergehäuses sowie mit einer Temperaturüberwachungseinheit versehen ist, in welcher ein Temperaturgrenzwert hinterlegt und der die Gehäuseinnentemperatur zugeführt ist.

Ein derartiger Rechner ist aus dem Siemens-Katalog IPC10, Ausgabe 1992 bekannt. Dieser wird zur Lösung prozeßnaher Aufgaben eingesetzt, z. B. zum Erfassen von Meßwerten, Betriebs- und Maschinendaten oder zum Bedienen und Beobachten von Prozeßablaufen. Entsprechend den verschiedenen Anforderungen ist der Rechner für unterschiedliche Umgebungstemperaturen ausgelegt. Dabei ist eine Überwachungseinheit auf einer Busplatine des Rechners vorgesehen, die alle wichtigen Funktionsabläufe und Umgebungsbedingungen, z. B. Stromversorgung oder Betriebstemperatur, des Rechners überwacht. Diese Überwachungseinheit zeigt Fehler an und ermöglicht ein geordnetes Abschalten im Sinne eines definierten Rücksetzens des Rechners.

Der vorliegenden Erfindung liegt die Aufgabe zugrunde, einen Rechner der eingangs genannten Art anzugeben, mit welchem Reaktionen auf überhöhte Innentemperaturen flexibel gestaltet werden können.

Diese Aufgabe wird dadurch gelöst, daß die Temperaturüberwachungseinheit die Innentemperatur mit dem Grenzwert vergleicht und beim Überschreiten des Grenzwertes entsprechend einer Parametrierung entweder in einer ersten Betriebsart den zu steuernden technischen Prozeß in einen sicheren Zustand nach Maßgabe eines im Rechner ablaufenden Programms steuert oder in einer zweiten Betriebsart die Rechnerelektronik abschaltet.

Vorteilhaft ist, daß der Anwender parametrieren kann, in welcher Betriebsart die Temperaturüberwachungseinheit arbeitet. Die erste Betriebsart ist für kritische Anwendungen geeignet, in welchen durch eine überhöhte Innentemperatur eine drohende Zerstörung des Rechners durch ein verzögertes Ausschalten in Kauf genommen wird, um z. B. eine zu steuernde Anlage in einen sicheren Zustand zu fahren.

Dagegen ist in unkritischen Anwendungen die zweite Betriebsart passend. Hier wird beim Erreichen des Temperaturgrenzwertes die Rechnerelektronik sofort ausgeschaltet, um eine Zerstörung von Komponenten des Rechners zu verhindern.

In einer Ausgestaltung der Erfindung wird in der zweiten Betriebsart dadurch, daß die Temperaturüberwachungseinheit die Lüfter des Rechners erst nach einer vorgebbaren Zeitspanne ausschaltet, die Rechnerelektronik schneller abgekühlt.

Weitere Ausgestaltungen der Erfindung ergeben sich aus den weiteren Unteransprüchen.

Anhand der Zeichnung, in der Ausführungsbeispiele der Erfindung dargestellt sind, werden die Erfindung und deren Ausgestaltungen sowie Vorteile näher erläutert.

Es zeigen
- Figur 1: ein Blockschaltbild einer an einen Prozeß angeschlossenen Rechnersystemeinheit und
- Figur 2: eine Temperaturüberwachungseinheit.

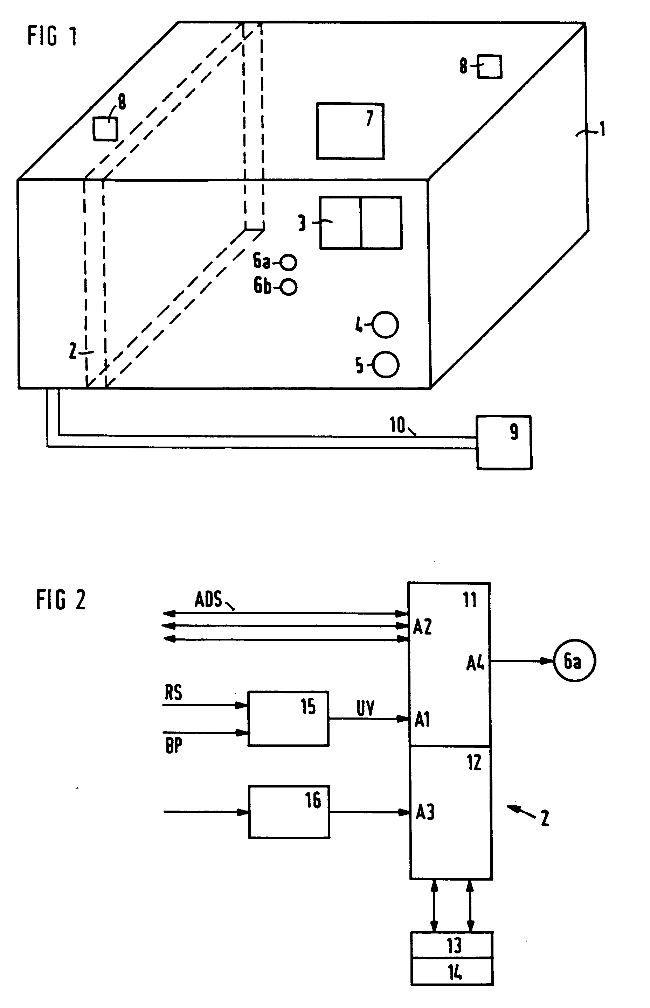

In Figur 1 ist mit 1 eine Systemeinheit eines Rechners, z. B. eines Personalcomputers, bezeichnet, welcher mit einer Temperaturüberwachungseinheit 2 versehen ist. Über geeignete Anschlüsse ist die Temperaturüberwachungseinheit 2 mit einer am Gehäuse angeordneten Statusanzeigeeinheit 3, einer LED-Funktionsanzeige 6a, 6b, einem Lüfter 7 sowie einem Temperatursensor 8 verbunden. Die Temperaturüberwachungseinheit 2 ist als steckbare Baugruppe ausgebildet und zusammen mit anderen Baugruppen des Rechners, z. B. mit einer CPU-Baugruppe, einer Kommunikationsbaugruppe sowie Speicherbaugruppen, in eine mit entsprechenden Steckplätzen versehene Adreß-, Daten- und Steuerleitungen aufweisende Busplatine des Rechners gesteckt. Die Statusanzeigeeinheit 3 dient zur Anzeige von Statusmeldungen. Die LED-Funktionsanzeige 6a zeigt an, ob die zulässige Innentemperatur des Rechners überschritten ist, und die LED-Funktionsanzeige 6b, ob der Lüfter 7 störungsfrei arbeitet. Mit einem KEYLOCK-Schalter 4 ist es möglich, Rechnereingaben über eine hier nicht dargestellte Tastatur zu sperren, und mit einem RESET-Schalter 5 kann der Rechner in einen definierten Anfangszustand zurückgesetzt werden. Ein zu steuernder technischer Prozeß 9 ist über Busleitungen 10 mit der Kommunikationsbaugruppe der Systemeinheit 1 verbunden und wird nach Maßgabe eines auf der CPU-Baugruppe des Rechners ablaufenden Steuerprogramms gesteuert. Weitere Bestandteile des Rechners, wie Speicherlaufwerke oder Grafikbaugruppen, sind für die Erfindung ohne Bedeutung und brauchen nicht näher erläutert zu werden.

Figur 2 zeigt die Temperaturüberwachungseinheit 2 mit Anschlüssen A1, A2, A3, A4. Die Überwachungseinheit 2 besteht im wesentlichen aus einem Gate-Array 11 und einem Mikro-Controller 12, z. B. einem Mikro-Controller des Typs 8051 der Firma Intel, sowie Speichern in Form eines Flash-EPROMs 13 und eines RAMs 14. An dem Anschluß A1 ist eine Spannungsüberwachungseinheit 15 angeschlossen, welcher die Versorgungsspannungen RS der im Rechner eingebauten Stromversorgungseinheit und eine Batteriespannung BP zugeführt sind. Für den Fall, daß Störungen in der Stromversorgungseinheit auftreten, erzeugt die Spannungsüberwachungseinheit 15 aus der Batteriespannung BP die für den Betrieb des Gate-Arrays 11 und des Mikro-Controllers 12 erforderlichen Spannungen UV. Im störungsfreien Betrieb werden diese erforderlichen Spannungen UV aus den Versorgungsspannungen RS der Stromversorgungseinheit gewonnen. Die Anschlüsse A2 verbinden die Temperaturüberwachungseinheit 2 mit den Adreß-, Daten- und Steuerleitungen ADS der Busplatine. An den Anschluß A3 ist über einen geeigneten Analog-Digital-Wandler 16 der Temperatursensor 8 (Figur 1) angeschlossen. Der Anschluß A4 ist mit der LED-Anzeige 6a verbunden, welche überhöhte Innentemperaturen beim Überschreiten des Temperaturgrenzwertes in der Systemeinheit anzeigt.
Damit in Abhängigkeit der Innentemperatur geeignete Maßnahmen eingeleitet werden können, ist es zunächst erforderlich, ein entsprechendes Temperaturüberwachungsprogramm in das Flash-EPROM 13 zu laden und zu parametrieren. Dazu wird z. B. von einem Massenspeicher des Rechners das Temperaturüberwachungsprogramm in den Hauptspeicher des Rechners geladen, welches menügesteuert mit folgenden zwei Parametern versorgt wird:
a) mit einem Temperaturgrenzwert, welcher während des Betriebs des Rechners mit der aktuellen Innentemperatur verglichen wird, und
b) mit einer einer ersten bzw. zweiten Betriebsart entsprechenden Zahl.

In beiden Betriebsarten vergleicht die Temperaturüberwachungseinheit 2 die Innentemperatur mit dem Temperaturgrenzwert, und für den Fall, daß während des Betriebs des Rechners die Innentemperatur den Grenzwert überschreitet, steuert die Temperaturüberwachungseinheit 2 in der ersten Betriebsart den zu steuernden technischen Prozeß 9 in einen sicheren Zustand nach Maßgabe eines im Rechner ablaufenden Fehlerprogramms. Dagegen schaltet die Temperaturüberwachungseinheit 2 in der zweiten Betriebsart die Rechnerelektronik ab.
Nach der Parametrierung wird das Temperaturüberwachungsprogramm vom Hauptspeicher in das Flash-EPROM transferiert und dort hinterlegt. Damit ist die Programmierung und Parametrierung der Temperaturüberwachungseinheit 2 abgeschlossen, und der Rechner kann zur Steuerung des technischen Prozesses 9 (Figur 1) eingesetzt werden. Während des Steuerbetriebs bearbeitet der Rechner den technischen Prozeß 9 nach den Vorgaben eines vom Programmspeicher in den Arbeitsspeicher transferierten Steuerprogramms, und für den Fall, daß aufgrund einer Störung die Innentemperatur der Systemeinheit 1 des Rechners den parametrierten Temperaturgrenzwert überschreitet, leitet die Temperaturüberwachungseinheit 2 entsprechend der parametrierten Betriebsart Maßnahmen ein. In einer eingestellten zweiten Betriebsart schaltet die Temperaturüberwachungseinheit 2 über eine Steuerleitung ST die Versorgungsspannungen für die Rechnerelektronik ab. Vorzugsweise bleibt die Lüfterversorgungsspannung für eine vorgebbare, ebenfalls parametrierbare Zeitspanne aufrechterhalten, wodurch die abgeschaltete Rechnerelektronik weiter gekühlt wird.
Falls die erste Betriebsart parametriert ist, zeigt die Temperaturüberwachungseinheit 2 über die Adreß-, Daten- und Steuerleitungen der CPU-Baugruppe eine Störung an, wodurch die CPU-Baugruppe ein Fehlerprogramm startet und den zu steuernden technischen Prozeß 9 in einen sicheren Zustand fährt.

Das Temperaturüberwachungsprogramm kann selbstverständlich so ausgestaltet sein, daß weitere Parameter eingestellt werden können. Z. B. ist es vorteilhaft, einen zweiten Temperaturgrenzwert vorzusehen, wobei beim Unterschreiten dieses Wertes ein automatischer Wiederanlauf des Rechners erfolgt.

## Patentansprüche

1. Rechner, insbesondere Personalcomputer, mit einem Gehäuse, welcher einen technischen Prozeß steuert und der mit Mitteln (8) zum Erfassen der Innentemperatur des Rechnergehäuses sowie mit einer Temperaturüberwachungseinheit (2) versehen ist, in welcher ein Temperaturgrenzwert hinterlegt und der die Gehäuseinnentemperatur zugeführt ist, **dadurch gekennzeichnet,** daß die Temperaturüberwachungseinheit (2) die Innentemperatur mit dem Grenzwert vergleicht und beim Überschreiten des Grenzwertes entsprechend einer Parametrierung entweder in einer ersten Betriebsart den zu steuernden technischen Prozeß (9) in einen sicheren Zustand nach Maßgabe eines im Rechner ablaufenden Programms steuert oder in einer zweiten Betriebsart die Rechnerelektronik abschaltet.

2. Rechner nach Anspruch 1, **dadurch gekennzeichnet,** daß die Temperaturüberwachungseinheit (2) in der zweiten Betriebsart die Lüfter (7) des Rechners nach einer vorgebbaren Zeitspanne ausschaltet.

3. Rechner nach Anspruch 2, **dadurch gekennzeichnet,** daß beim Unterschreiten eines zweiten Temperaturgrenzwertes ein automatischer Wiederanlauf des Rechners erfolgt.

4. Rechner nach Anspruch 1, **dadurch gekennzeichnet,** daß in der ersten Betriebsart nach der Steuerung des technischen Prozesses in einem sicheren Zustand die Temperaturüberwachungseinheit (2) den Rechner ausschaltet, falls der zulässige Grenzwert weiterhin überschritten ist.
